# EUROPEAN PATENT APPLICATION

(11) **EP 0 615 714 A1**
(43) Date of publication of application: **21.09.1994**
(21) Application number: 94301757.4
(22) Date of filing: 11.03.1994
(51) Int. Cl.: A47J 31/20, A47J 31/06

(54) **Apparatus and method for beverage preparation**

(30) Priority: 17.03.1993 GB 9305460
(71) Applicant: GENERAL FOODS LIMITED, Oxon, OX16 7QU (GB)
(72) Inventor: Love, Graham, Farthingstowe, Northants, NN12 8EZ (GB); Newman, Alec Thomas, Banbury, Oxon (GB); Salkeld, Paul, Redditch, Worcestershire, BA7 4RX (GB)
(74) Representative: Allard, Susan Joyce

(57) **Abstract**

An apparatus for the preparation of a beverage, which apparatus comprises a plunger (1) adapted to fit tightly into a receptacle for the preparation of the beverage and a water-permeable beverage package (8) containing one or more beverage preparation ingredients attached to the plunger (1), the plunger (1) comprising a handle (2) and a plunger body (3) attached to the handle, the plunger (1) being provided with means for the attachment of the said beverage package thereto.

The beverage package may contain leaf tea or roast and ground coffee.

## Description

The present invention relates to an apparatus and method for beverage preparation and, in particular, to an apparatus which incorporates as an integral part thereof a beverage package containing leaf tea or ground coffee which is intended to provide an infusion of tea or coffee, respectively.

The production of freshly brewed tea or coffee involves contacting tea leaves or roast and ground coffee with hot water and separating the beverage from the tea leaves or coffee grounds. Various methods for the production of freshly brewed coffee or tea are well known. For example, tea is prepared traditionally in a teapot, the tea leaves being immersed in boiling water and allowed to stand before being poured from the pot. Freshly brewed coffee may be prepared by the continuous passage of hot water through roast and ground coffee contained in a filter and the coffee collected in a jug or other receptacle, or by percolation which involves the continuous recycling of water through the roast and ground coffee.

It has previously been proposed to seal fresh roast and ground coffee or tea leaves in individual air-impermeable packages. For example, cartridges or capsules containing compacted ground coffee are known for use in certain coffee making machines which are generally termed "espresso" machines. In the production of coffee using these coffee machines the coffee cartridge is placed in a brewing chamber and hot water is generally caused to pass under pressure through the cartridge, thereby extracting the aromatic coffee constitutents from the ground coffee and producing a coffee beverage.

Cartridges containing roast and ground coffee in which hot water flows under gravimetric force through the cartridge are also known. A cartridge of this general type is described in British Patent No. 1397116.

The cartridges for use in "espresso" machines and those through which water flows under gravimetric force contain a filter positioned beneath the charge of coffee. In the production of coffee from these cartridges water is generally injected into the coffee containing cartridge through a needle. The cartridge is filled with water which flows through the filter and is collected in a cup or other receptacle.

It is also well known to package leaf tea or ground coffee in so called tea bags or coffee bags which generally comprise leaf tea or ground coffee enclosed between two pieces of a filter material which are sealed around their edges to form a bag.

Another method of brewing beverages, which is usually used for the preparation of coffee from roast and ground coffee, rather than for the preparation of tea is the so-called "cafetiere" system. This system comprises a jug with a plunger which is adapted to fit tightly against the side of the jug. A desired amount of loose roast and ground coffee is placed in the bottom of the jug, boiling or nearly boiling water is poured onto the grounds and the plunger placed in the top of the jug at the level of the water. After a few minutes brewing time the plunger is depressed until it rests immediately above the roast and ground coffee. The plunger is designed to allow the flow of water or brewed coffee through it, whilst acting as a filter to prevent the coffee grounds from passing through it. Although the coffee brewed by using the cafetiere system is generally considered to be of a very high quality, the system suffers from the disadvantages that the system has to stand before the plunger is depressed; the plunger cannot be made to repeat the extraction process because coffee grounds or tea leaves stay at the bottom of the jug; the coffee grounds or tea leaves that sink to the bottom of the jug are not subjected to the full extraction process; the coffee or tea brewed by the system cools whilst waiting; the spent roast and ground coffee is not easy to dispose of; and the coffee grounds generally have to be scraped out of the jug or washed down the sink.

We have now developed a cafetiere type of beverage preparation apparatus which does not suffer from the disadvantage of the cafetiere system currently available.

Accordingly, the present invention provides an apparatus for the preparation of a beverage, which apparatus comprises a plunger adapted to fit tightly into a receptacle for the preparation of the beverage and a water-impermeable beverage package containing one or more beverage preparation ingredients attached to the plunger, the plunger comprising a handle and a plunger body attached to the handle, the plunger being provided with means for the attachment of the said beverage package thereto.

The plunger body is of an appropriate outside dimension to fit tightly into the jug or other receptacle in which the beverage is to be prepared. The plunger body generally comprises an annular rim of a flexible or semi-rigid material which is attached to the said handle by means of one or more spokes which may be arranged in a cruciform pattern. The plunger body generally also comprises a mesh which is surrounded by the annular rim, the mesh helping to support the beverage package in its attachment to the plunger body.

The means for attachment of the beverage package to the plunger body may comprise an annular downwardly extending flange formed on the plunger body which is adapted to fit into a complementary U-shaped channel formed on the said beverage package. In this embodiment of the invention the beverage package will generally be in the form of a rigid disc with a generally vertical side wall which forms the side wall of the beverage package and may be of a non-permeable material. Water-permeable material seals the top and bottom of the disc and the beverage ingredient(s) are contained in the space therebetween. The beverage package has a U-shaped channel surrounding the side wall into which the annular flange formed on the plunger body is adapted to fit. The beverage package and the plunger body are designed to be snap fitted together, but with a quick-release mechanism.

An alternative means of attachment of the beverage package to the plunger body may comprise a screw type of fitting. In this embodiment the beverage package is located in a beverage package holder which is adapted to screw into the annular rim of the plunger body. The screw fitting may be of the bayonnet type with a lug on one of the annular rim of the plunger body or on the beverage package holder being adapted to fit into a complementary blind channel formed on the other of the annular rim of the plunger body or the beverage package holder. Preferably two diagonally opposite lugs are provided on the annular rim of the plunger body which are screwed into complementary blind channels formed on the beverage package holder by turning the beverage package holder by one quarter of a turn, thus securing the assembly.

A further alternative means of attachment of the beverage package to the plunger body comprises a beverage package holder which push fits onto the plunger body.

In the embodiment of the invention as described above in which a beverage package holder is used to locate the beverage package, the said beverage package is generally provided with a lip or rim which fits over the edge of the said holder to hold the package in position.

A still further alternative means of attachment of the plunger body to the beverage package comprises a plurality of claws provided on the plunger body which are adapted to engage beneath an annular rim formed around the periphery of a beverage package. The claws may be adapted to move from a first open position to a second position in which they engage beneath the annular rim formed around the periphery of the beverage package by means of a spring loaded mechanism.

An alternative arrangement is for the beverage package to be fitted directly onto the end of the handle of the plunger. One such arrangement comprises the handle of the plunger being provided with a plurality of retractable claws which are adapted in their retracted position to locate through a complementary hole formed in a beverage package and in their expanded position to engage beneath an annular rim formed around the hole of the beverage package. Preferably, the handle of the plunger is hollow and the movement of the claws from the retracted to the expanded position is be effected by means of a moveable spindle located in the hollow handle.

The plunger as described herein is used in combination with a receptacle, such as a jug, into which it is designed to fit tightly.

The beverage packages which are used in the apparatus of the present invention comprise a top and bottom which we made from the same or different water-permeable materials, preferably a water-permeable synthetic material which is heat sealable. Examples of suitable water-permeable synthetic materials comprise a spun-bonded non-woven polypropylene sold under the Trade Name COROVIN, a spun-bonded polyester sold under the Trade Name REMAY and a spun-bonded nylon web sold under the Trade Name CEREX. Melt blown polypropylene may also be used. Other materials which may also be used include cellulosic materials coated with a material which is activated by heat, or polyethylene or polypropylene perforated films.

When the beverage package used in the apparatus of the present invention is located in a beverage package holder the side wall of the package will preferably be formed from a water-impermeable material. The flow of water through the package is thereby improved since water does not then flow through the side wall of the package. Suitable examples of water-impermeable materials for the formation of the side wall are polypropylene, polyethylene, polyester etc., or a heat and pressure treated water-permeable material.

The packages of the present invention may be produced in different sizes in order to give different serving options. For example, a package containing about 30 grams of roast and ground coffee will produce 5 cups of coffee, a package containing about 20 grams of roast and ground coffee will produce 3 cups of coffee, whilst a package containing about 7 grams of roast and ground coffee will produce 1 cup of coffee.

The apparatus of the present invention provides the benefit of an increased extraction of the beverage ingredients over the conventional cafetiere system owing to the inverse filtration through the beverage package which occurs on plunging. The beverage package used in the apparatus also allows all of the beverage extract to be used for consumption, whereas normally the extract at the bottom of the receptacle used in the cafetiere system is not served. These advantages make the system more economical in the use of the beverage ingredients.

The present invention also includes within its scope a method for the preparation of a beverage which comprises filling a receptacle with boiling or near boiling water to a desired level, inserting into the receptacle a plunger which is adapted to fit tightly therein, the plunger having a beverage package containing one or more beverage ingredients attached thereto, allowing the beverage ingredients to infuse in and become wetted by the water, and thereafter depressing the plunger to cause the water to flow through the beverage package.

The plunger and beverage package used in the said method are as described herein.

The present invention will be further described with reference to the accompanying figures of the drawings, in which:-
Figures 1A and 1B illustrate a plunger and beverage package of a first embodiment of the invention;
Figure 2A illustrates the plunger and beverage package of Figures 1A and 1B attached together;
Figure 2B illustrates a jug into which the plunger and beverage package combination of Figure 2A is designed to fit;
Figure 3 illustrates the brewing of a beverage from the plunger and beverage package combination of Figure 2A;
Figures 4A and 4B illustrate a beverage package and beverage package holder of a second embodiment of the invention;
Figures 5A and 5B illustrate the manner in which the combined beverage package and beverage package holder of Figures 4A and 4B are attached to a plunger;
Figure 6 illustrates the brewing of a beverage from the plunger and beverage package combination of Figures 5A and 5B;
Figures 7A, 7B and 7C illustrate the plunger, beverage package and beverage package holder, respectively of a third embodiment of the invention; and
Figure 8 illustrates the brewing of the beverage from the plunger and beverage package/package holder combination of Figures 7A, 7B and 7C.
Figures 9A, 9B and 9C illustrate a beverage package and beverage package holder in accordance with a fourth embodiment of the invention; and
Figures 10A and 10B illustrate a beverage package and beverage package holder in accordance with a fifth embodiment of the invention.

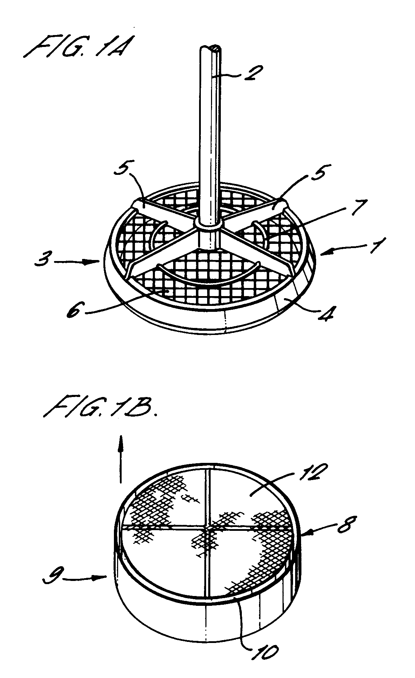

Referring to the drawings, a first embodiment of the present invention is illustrated in Figures 1A, 1B, 2A and 3. A plunger 1 has a handle 2 and a plunger body 3. The plunger body comprises a ring 4 of a semi-rigid plastics material which is attached to the handle 2 by means of four spokes 5. A mesh 6 is attached to the ring 4 and the spokes 5, the mesh helping to support the beverage package when it is attached to the plunger body. Additional strength is provided to the plunger body by a ring 7 of plastics material which is attached to the spokes 5.

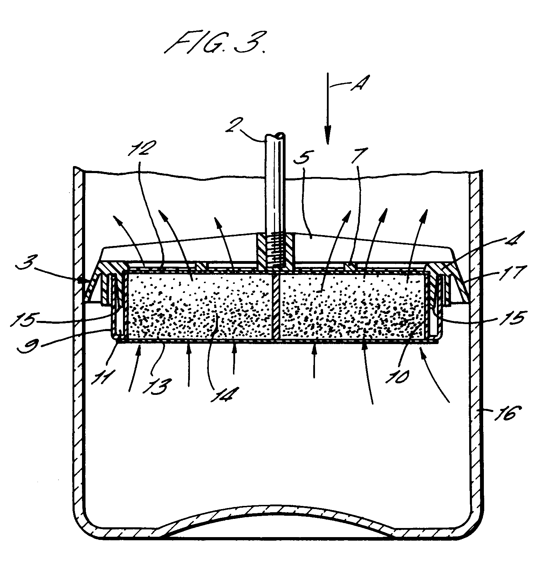

The beverage package 8 as shown in Figure 1B comprises a rigid disc 9 which forms the side wall 10 of the beverage package. As best shown in Figure 3 the rigid disc 9 has a U-shaped channel 11 surrounding the side wall 10. The beverage package 8 has top and bottom water-permeable filters 12 and 13, respectively sealed to the side wall 11. One or more beverage ingredients 14 fills the space between the filters 12 and 13.

Also as best shown in Figure 3, the plunger body has a downwardly projecting annular flange 15 which snap fits into the U-shaped channel 11 on the beverage package.

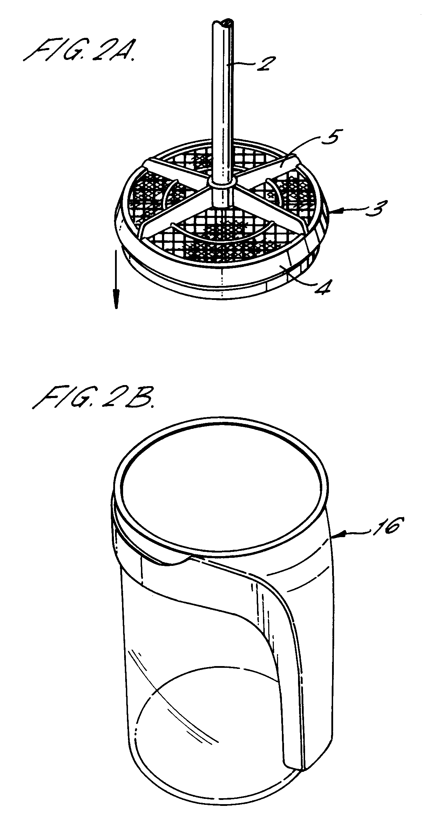

The plunger body and beverage package are snap fitted together and, as shown in Figure 2A, the combination is then inserted into a jug 16 containing a desired amount of water, the jug being designed so that the plunger body is a tight fit in it. The plunger body is provided with an annular skirt 17 which assists in maintaining the plunger in contact with the walls of jug 16.

The plunger body and beverage package combination are immersed just beneath the top level of the water in the jug 16 and after a few minuutes the plunger and beverage package combination is moved downwards in the direction of arrow A. Water flows through the beverage package in the direction of the arrows as shown in order to prepare the desired beverage.

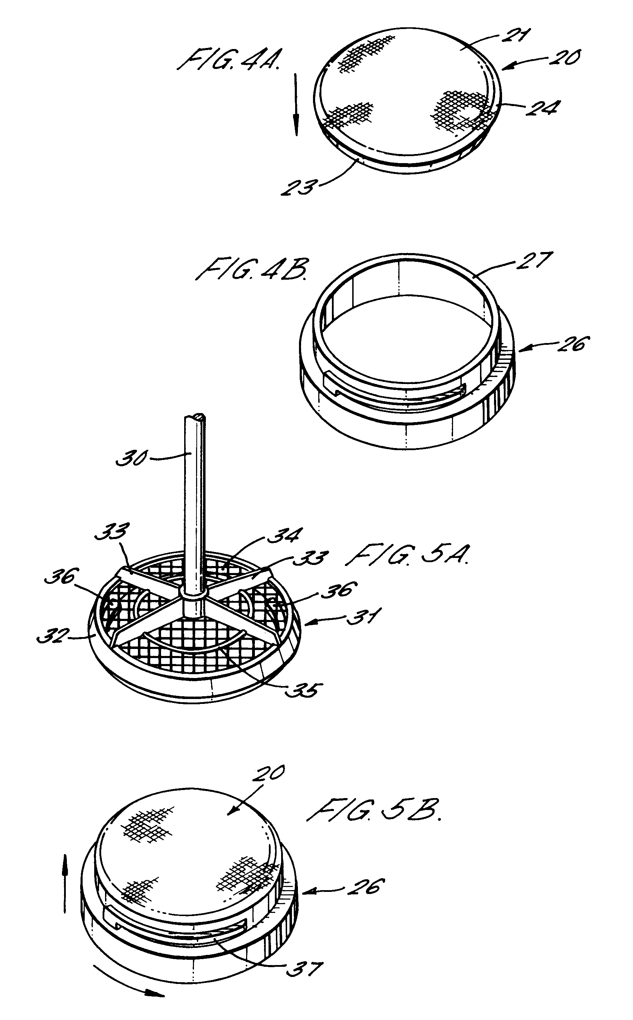

A second embodiment of the present invention is illustrated with reference to Figures 4A, 4B, 5A, 5B and 6. A beverage package 20 has a top 21 and a bottom 22 both formed from a water-permeable material. The top 21 and bottom 22 are joined together by a side wall 23 of a water-impermeable material. The top 21 overlaps the edge of the side wall 23 to form an annular rim 24 around the package. The beverage package is filled with one or more beverage ingredient(s) 25.

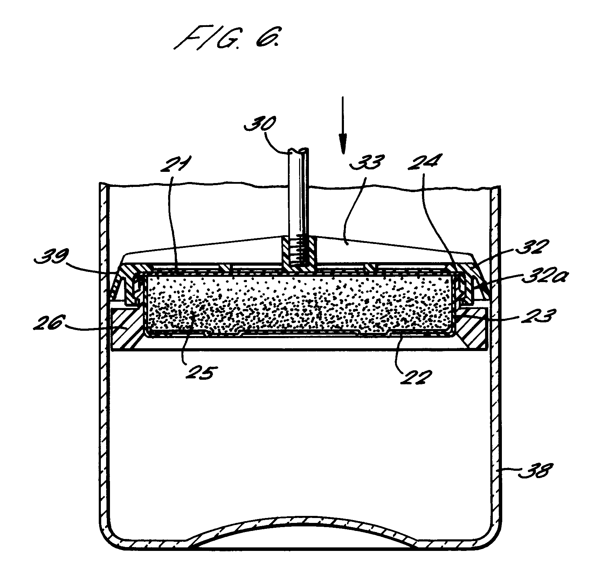

The beverage package 20 is located in a cylindrical beverage package holder 26, the rim 24 of the beverage package 20 locating on the rim 27 of the holder. The combined beverage package 20 and holder 26 as shown in Figure 5B is adapted for attachment to the plunger as shown in Figure 5B. The plunger comprises a handle 30 and a plunger body 31. The plunger body 31 comprises a ring 32 of a semi-rigid plastics material which is attached by means of four spokes 33 to the handle 30. A mesh 34 is attached to the ring 32 and the spokes 33, the mesh helping to support the beverage package when it is attached to the plunger body. Additional strength is provided to the plunger body by a ring 35 of plastics material which is attached to the spokes 33.

The plunger and the combined beverage package and package holder are attached together by means of a bayonnet type of fitting. The ring 32 of the plunger body 31 is provided with a downwardly extending flange 32a with diametrically opposed lugs 36 which are adapted to fit into corresponding blind channels 37 formed in the sidewall of the beverage package holder. In order to secure the plunger and combination of beverage package 20 and beverage package holder 26 together, the beverage package holder 26 is pushed inside the annular ring 32 of the plunger. The holder 26 is then turned one quarter of a turn whereby the lugs 36 engage the blind channel 37.

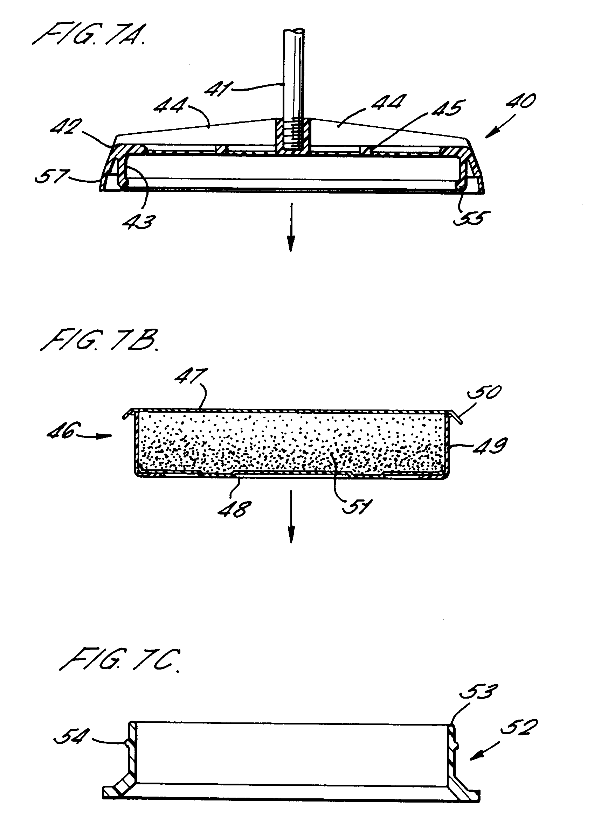

As is best shown in Figure 6 the annular rim 24 of the beverage package is sealed between the plunger ring 32 and the beverage package holder 26.

The brewing of a beverage from the beverage package takes place in a similar manner to that as described with reference to Figure 3. As shown in Figure 6 the combination of plunger, beverage package and beverage package holder is inserted into a jug 38 containing a desired amount of water. The plunger body is provided with an annular skirt 39 which assists in mainintaining the plunger in contact with the walls of jug.38 during the brewing of the beverage.

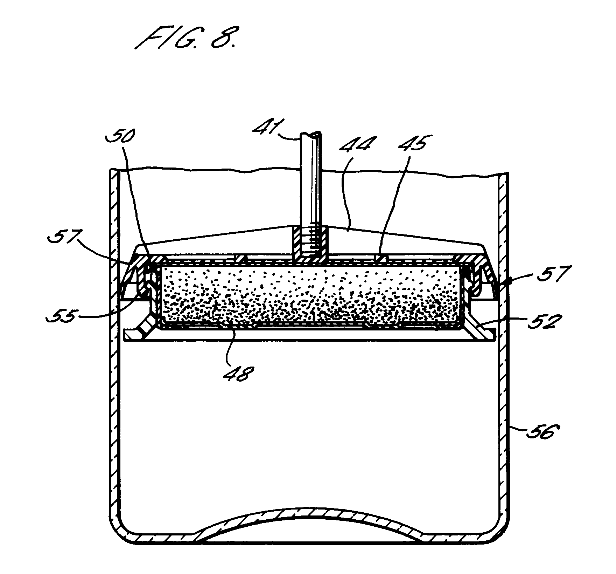

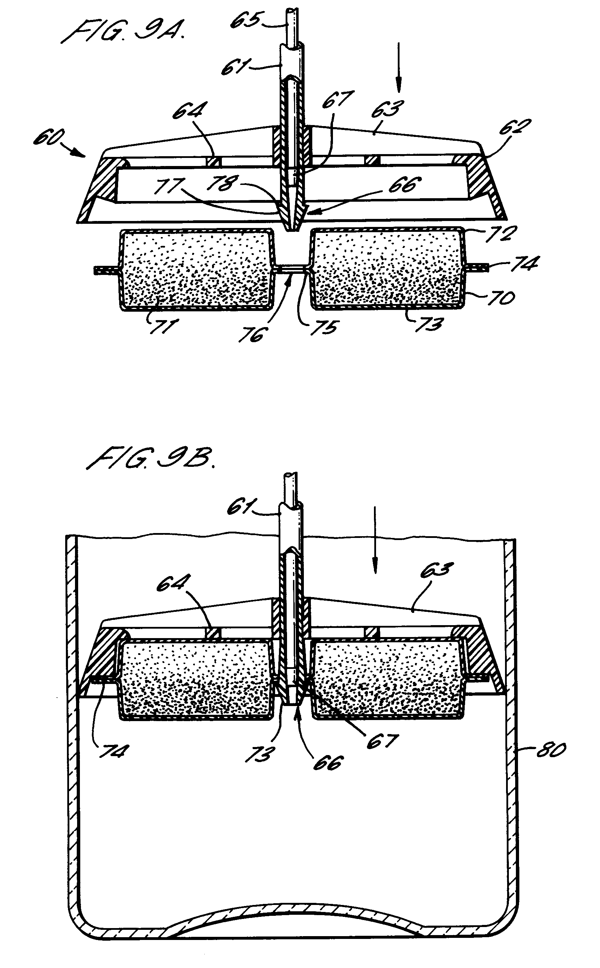

A third embodiment of the present invention is described with reference to Figures 7A, 7B, 7C and 8. Referring to Figures 7A to 7C, a plunger 40 has a handle 41 and a plunger body 42. The plunger body comprises a ring 43 of a semi-rigid plastics material which is attached by means of spokes 44 to the handle 41. Additional strength is provided to the plunger body by means of a ring 45 of plastics material which joins the spokes 44.

The beverage package 46 as shown in Figure 7B has a top 47 and a bottom 48 both formed of a water-permeable material. The top 47 and bottom 48 are joined together by a side wall 49 of a water-impermeable material. The top 47 overlaps the edge of the side wall 49 to form an annular rim 50 around the package. The beverage package is filled with one or more beverage ingredient(s) 51.

Figure 7C illustrates a cylindrical holder 52 for the beverage package. The rim 50 of the beverage package locates on the rim 53 of the holder 52. The combined beverage 46 package and beverage package holder 52 are adapted to snap fit into the plunger 42. This is achieved by the annular projection 54 on the holder 52 being pushed past the lip 55 on the plunger ring 43, the holder and plunger then being attached to one another.

As is best shown in Figure 8 the annular rim 50 of the beverage package is sealed between the plunger rim 43 and the beverage package holder 52.

The brewing of a beverage from the beverage package takes place in a similar manner to that as described with reference to Figure 3. As shown in Figure 8 the combination of plunger, beverage package and beverage package holder is inserted into a jug 56 containing a desired amount of water. The plunger body is provided with an annular skirt 54 which assists in maintaining the plunger in contact with the walls of jug 56 during the brewing of the beverage.

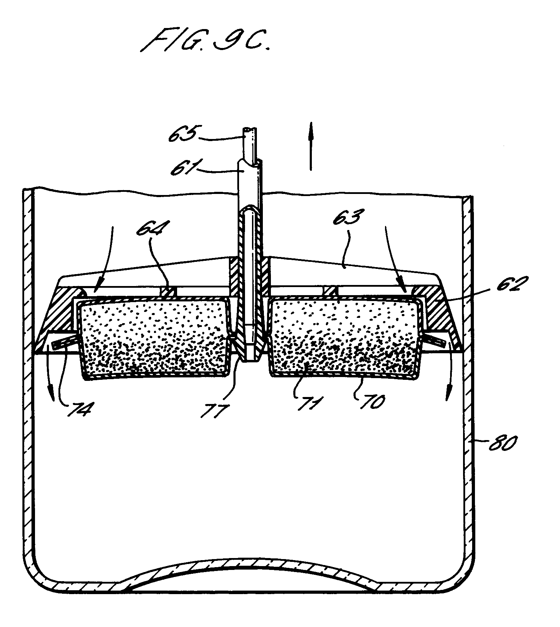

A fourth embodiment of the present invention is described with reference to Figures 9A, 9B and 9C. Referring to Figures 9A to 9C, a plunger 60 has a handle 61 and a plunger body 62. The plunger body 62 comprises a ring of a plastics material which is attached by means of spokes 63 to the handle 61. Additional strength is provided to the plunger body by means of a ring 64 of plastics material which joins the spokes 63 together. The handle 61 is shown in part cutaway section and has a moveable spindle located in the centre thereof. The spindle 65 is adapted to move in an upwards and downwards direction. The handle 61 is provided at the bottom thereof with a plurality of claws 66. The movement of the spindle 65 downwards through the handle 61 causes the claws 66 to open, the tip 67 of the spindle pushing the claws 66 apart.

A cartridge 70 containing beverage ingredients 71 comprises a formed annular top 72 and formed annular bottom 73 both of a water-permeable material. The top 72 and bottom 73 are sealed around their peripheral edges at 74 and also sealed in the centre of the annulus at 75. The central area inside seal 75 comprises a hole 76 which is of appropriate dimensions such that the claws 66 of the plunger handle 61 will fit through the hole 76 when in their retracted position.

Figure 9B shows the plunger 60 with the cartridge 70 attached thereto. The attachment of the cartridge to the plunger is achieved by moving the plunger 60 in the direction of the arrow. This movement causes the claws 66 to be inserted through the hole 76 formed in the cartridge 70. The spindle 65 in the handle is then moved in a downwards direction so that the tip 67 thereof expands the claws 66. The claws have angled faces 77 terminating in shoulders 78 which are designed, when the claws are in the expanded position as shown in Figure 9B, to locate beneath the annular ring 75 of the cartridge.

As shown in Figure 9B, the plunger with cartridge attached is located in a jug 80 and depressed during the brewing cycle. The edge 74 of the cartridge 70 seals against the plunger due to the back pressure of water during this operation.

Figure 9C shows the arrangement of plunger 60 and cartridge 70 when the system is moved in an upwards direction in the jug 80. During this movement the seal between the annular rim 74 of the cartridge and the plunger opens, so allowing water to pass through the plunger and around the edges of the cartridge 70 in the direction as shown by the solid arrows. This mechanism allows the plunger to be depressed several times during the brewing cycle. This improves the brewing quality and cycle time, since a better extraction from the beverage ingredients contained in the cartridge 70 can be obtained in a minimum time.

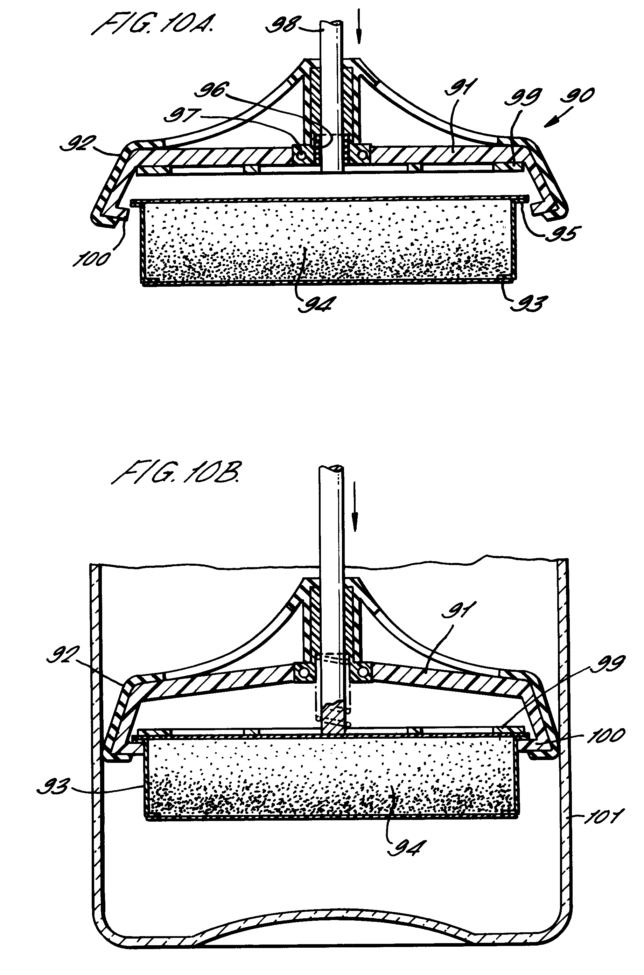

A fifth embodiment of the present invention is described with reference to Figures 10A and 10B. Referring to Figure 10A, a plunger 90 comprises a plurality of pivoted claws 91 shrouded by a silicone rubber moulding 92. As shown in Figure 10A the claws 91 are in the retracted position and a cartridge containing beverage ingredients 94 and having a annular lip 95 may be inserted inside the claws. The claws 91 on the plunger can then be pulled up by means of a spring 96 and pivot 97 arrangement provided on the handle 98 of the plunger. The handle 98 of the plunger is attached to a spring loaded plate 99. Flanges 100 on the claws 91 locate beneath the rim 95 of the cartridge 93, thus maintaining the cartridge in position. As best shown in Figure 10B the cartridge 93 is held between the spring loaded plate 99 of the plunger and the flanges 100 of the claws 91. After the beverage has been brewed by the depression of the plunger 90 in jug 101, the cartridge can easily be released from the plunger by pressing the plunger in a downwards direction thus releasing the claws 91 from their grip beneath the rim 95 of the cartridge 93.

The beverage package used in the apparatus and method of the present invention may contain any desired beverage ingredients, for example, roast and ground coffee, leaf tea, chocolate powder and, according to individual taste, powdered milk or creamer, sugar and/or an artificial sweetner.

## Claims

1. An apparatus for the preparation of a beverage, which apparatus comprises a plunger adapted to fit tightly into a receptacle for the preparation of the beverage and a water-permeable beverage package containing one or more beverage preparation ingredients attached to the plunger, the plunger comprising a handle and a plunger body attached to the handle, the plunger being provided with means for the attachment of the said beverage package thereto.

2. An apparatus as claimed in claim 1 wherein the plunger body is provided with a U-shaped annular downwardly extending flange which is adapted to fit into a complementary U-shaped channel formed on the said beverage package.

3. An apparatus as claimed in claim 2 wherein the beverage package comprises a rigid side wall with a water-permeable material sealed to the top and bottom of the side wall and the beverage ingredient(s) being contained in the space therebetween, the beverage package having a U-shaped channel surrounding the side wall into which the annular flange formed on the plunger body is adapted to fit.

4. An apparatus as claimed in claim 1 wherein the beverage package is located in a beverage package holder which is adapted to screw into the plunger body.

5. An apparatus as claimed in claim 4 wherein the screw fitting is of the bayonnet type.

6. An apparatus as claimed in claim 1 wherein the beverage package is located in a beverage package holder which push fits onto the plunger body.

7. An apparatus as claimed in any one of claims 4 to 6 wherein the beverage package is provided with a lip or rim which fits over the edge of the beverage package holder to hold the said package in position.

8. An apparatus as claimed in claim 1 wherein the handle of the plunger is provided with a plurality of retractable claws which are adapted in their retracted position to locate through a complementary hole formed in a beverage package and in their expanded position to engage beneath an annular rim formed around the hole of the beverage package.

9. An apparatus as claimed in claim 8 wherein the handle of the plunger is hollow and the movement of the claws from the retracted to the expanded position is effected by means of a moveable spindle located in the hollow handle of the plunger.

10. An apparatus as claimed in claim 1 wherein the plunger body is provided with a plurality of claws which are adapted to engage beneath an annular rim formed around the periphery of a beverage package.

11. An apparatus as claimed in claim 10 wherein the claws are adapted to move from a first open position to a second position in which they engage beneath the annular rim formed around the periphery of the beverage package by means of a spring loaded mechanism.

12. An apparatus as claimed in any one of the preceding claims wherein the beverage package contains leaf tea or ground coffee.

13. An apparatus as claimed in any one of the preceding claims in combination with a receptacle for the preparation of the beverage into which the plunger is adapted to fit tightly.

14. An apparatus as claimed in claim 13 wherein the receptacle is a jug or pressure pot.

15. A method for the preparation of a beverage which comprises filling a receptacle with boiling or near boiling water to a desired level, inserting into the receptacle a plunger which is adapted to fit tightly therein, the plunger having a beverage package containing one or more beverage ingredients attached thereto, allowing the beverage ingredients to infuse in and become wetted by the water, and thereafter depressing the plunger to cause the water to flow through the beverage package.

16. A method as claimed in claim 15 wherein the plunger and beverage package are as defined in any one of claims 2 to 11.
